Europäisches Patentamt

European Patent Office

Office européen des brevets

(11) Publication number: **0 340 443**
**A2**

## EUROPEAN PATENT APPLICATION

(21) Application number: **89105261.5**

(22) Date of filing: **23.03.89**

(51) Int. Cl.4: **G01V 9/04**

(30) Priority: **30.04.88 JP 108316/88**

(43) Date of publication of application:
**08.11.89 Bulletin 89/45**

(84) Designated Contracting States:
**AT BE CH DE ES FR GB IT LI NL SE**

(71) Applicant: **Schaltbau Gesellschaft mbH**
**Klausenburger Strasse 6**
**D-8000 München 80(DE)**

(72) Inventor: **Ono, Shoichi**
**No. 21-17 Takashima 1-chome**
**Suwa-shi Nagano(JP)**
Inventor: **Kobayashi, Atsuhito**
**No. 21-17 Takashima 1-chome**
**Suwa-shi Nagano(JP)**

(74) Representative: **Patentanwälte Grünecker,**
**Kinkeldey, Stockmair & Partner**
**Maximilianstrasse 58**
**D-8000 München 22(DE)**

(54) Light signal reception circuit for photoelectric switch.

(57) A light reception signal circuit for photoelectric switch, comprising:

a photoelectric conversion circuit for receiving a light from a light emitting part controlled periodically for emission, and generating an electrical signal corresponding to a quantity of the received light;

a programmable attenuator for inputting the electrical signal coming from the photoelectric conversion circuit, and attenuating the electrical signal stepwise at every constant levels according to a digital control signal;

a first comparator for comparing an output voltage of the programmable attenuator with an upper bound threshold set beforehand, and generating an outgoing signal whenever said output voltage exceeds the upper bound;

a peak holding circuit for inputting the output voltage of said programmable attenuator, and holding a peak value of the output voltage on a time constant sufficiently longer than an emission period of said light emitting part;

a second comparator for comparing an output voltage of the peak holding circuit with a lower bound threshold set beforehand, and generating an outgoing signal when said output voltage comes to the lower bound threshold or below;

a counter for counting the outgoing signal of said first comparator as a clock, generating a digital control signal for stepping up an attenuation level of said programmable attenuator at every counts, and resetting said digital control signal by inputting the outgoing signal of the second comparator;

a third comparator for generating an outgoing signal as the photoelectric switch through comparing the output voltage of said programmable attenuator with a decision level set beforehand.

FIG. 1

## LIGHT RECEPTION SIGNAL CIRCUIT FOR PHOTOELECTRIC SWITCH

### Description of the invention

This invention relates to a light reception signal circuit for photoelectric switch intended for detecting a presence of object by means of a beam such as infrared ray or the like.

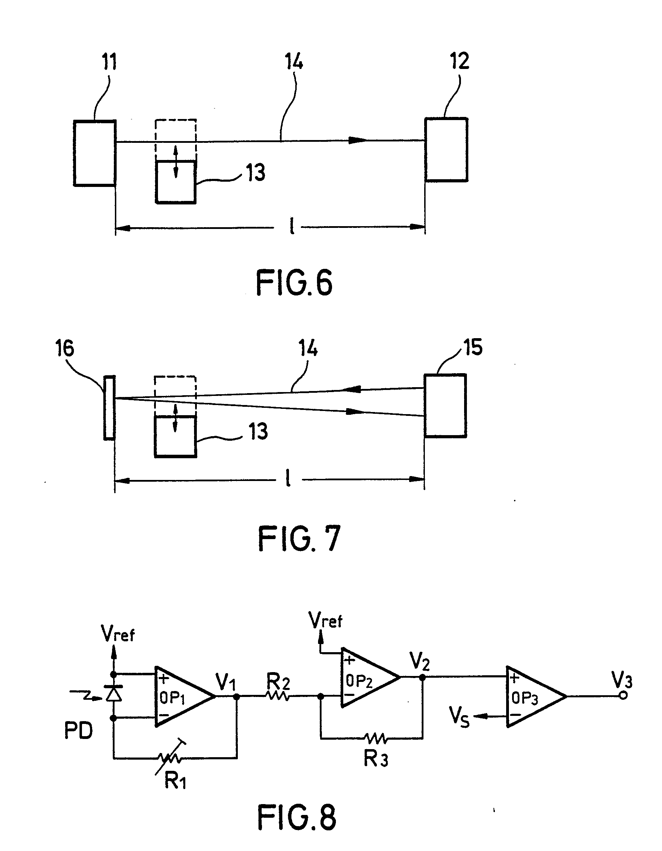

A photoelectric switch is intended for detecting a presence of object according to whether or not a light such as infrared ray or the like is intercepted by the object, and the photoelectric switch has a transmission type shown in Fig. 6 and a recurrent reflection type shown in Fig. 7.

The transmission type shown in Fig. 6 is that for which a light emitting part 11 and a light receiving part 12 are disposed opposite each other with an identified object 13 (moving member, for example) interposed therebetween, and a light 14 such as infrared ray or the like is emitted from the light emitting part 11 toward the light receiving part 12. On the other hand, the recurrent reflection type of Fig. 7 is that for which a light emitting/receiving part 15 functioning as a light emitting part and a light receiving part at the same time and a reflecting plate 16 are disposed opposite each other with the identified object 13 interposed therebetween, and the light 14 such as infrared ray or the like is emitted from the light emitting/receiving part 15 toward the reflecting plate 16, and a reflected light from the reflecting plate 16 is received by the light emitting/receiving part 15.

Both the two types generate an electrical signal according to a quantity of the light 14 received, and if the light 14 is intercepted by a move of the object 13, a change (deterioration) takes place on the electrical signal, and thus a presence of the object 13 at a predetermined position is detected.

Fig. 8 represents a prior art light reception signal circuit for detecting whether or not the light 14 is intercepted. In the drawing, a reference character $OP_1$ denotes an operational amplifier used as a photoelectric conversion circuit, wherein a photoelectric conversion element, or a photodiode PD connected, for example, in the direction illustrated therein is provided between (+) input end and (-) input end. Further, a constant voltage $V_{ref}$ is impressed on the (+) input end. Then, a volume (variable resistor) $R_1$ is provided between output end and (-) input end.

A reference character $OP_2$ denotes an operational amplifier used as a voltage amplifier circuit, the constant voltage $V_{ref}$ is impressed on its (+) input end, and an output voltage $V_1$ of the operational amplifier $OP_1$ is inputted to (-) input end through an input resistance R2. Further, a feedback resistance R3 is connected between output end and (-) input end.

A reference character $OP_3$ denotes a voltage comparator (hereinafter called comparator), an output voltage $V_2$ of the operational amplifier $OP_2$ is inputted to its (+) input end, which is compared with a standard voltage $V_s$, and an output voltage $V_3$ is generated.

In the aforementioned construction, when the light 14 is not intercepted by the object 13, the voltage $V_2$ is larger than the standard voltage $V_s$, and the output voltage $V_3$ of the comparator $OP_3$ comes to "H" level. On the other hand, if the light 14 is intercepted by the object 13, the output voltage $V_2$ becomes smaller than the standard voltage $V_s$, and the output voltage $V_3$ of the comparator $OP_3$ comes to "L" level. That is, the output voltage $V_3$ of the comparator $OP_3$ generates a signal on "H" or "L" level according to a position of the object 13, and a presence of the object 13 can be detected accordingly.

Meanwhile, if a measuring range (distance) $l$ in Fig. 6 and Fig. 7 becomes short, then the quantity of received light increases, therefore the quantity of a light coming out and a transmitted light of the object 13 increases when the object 13 is smaller than a light reception level diameter, or is translucent, or the object 13 is displaced somewhat from an axis of the light 14, and thus the state is just like a case where the object 13 is not present. That is, an erroneous operation for detecting the object 13 may result.

To prevent such erroneous operation due to a change in the distance $l$, a photocurrent is controlled by the volume $R_1$ of the photoelectric conversion circuit shown in Fig. 8 according to a change in the distance $l$, thereby adjusting the output voltage $V_2$ inputted to the comparator $OP_3$ to an appropriate voltage, or $V_2 = 2V_s$, for example.

(Problem to be Solved by the Invention)

The aforementioned control was effected by a user from operating manually the volume $R_1$ whenever the distance $l$ was changed or the switch was installed newly. Then, where installed outdoors, the quantity of light may decrease due to mist, dust and the like, and the aforementioned operation by means of volume is necessary so as to cope with a decrease of the quantity of light in each occasion.

An object of the invention is to provide a light reception signal circuit for photoelectric switch, which is intended for inputting an appropriate light reception signal at all times without requiring a manual control to a change in the quantity of received light due to change in distance, or mist, dust and the like.

(Means to Solve the Problem)

The light reception signal circuit for photoelectric switch according to the invention has a photoelectric conversion circuit for receiving a light from a light emitting part controlled periodically for emission, and generating an electrical signal corresponding to a quantity of the received light. Then, a programmable attenuator for inputting the output electrical signal, and attenuating the electrical signal stepwise at every constant levels according to a digital control signal is provided on the photoelectric conversion circuit. Further, a first comparator for comparing the output voltage with an upper bound threshold set beforehand, and generating an outgoing signal whenever the output voltage exceeds the upper bound threshold is provided on the programmable attenuator. Then, a peak holding circuit for inputting an output voltage of the programmable attenuator, and holding a peak value of the output voltage on a time constant sufficiently longer than an emission period of the light emitting part is provided. A second comparator for comparing an output voltage of the peak holding circuit with a lower bound threshold set beforehand, and generating an outgoing signal when the output voltage comes to the lower bound threshold or below is further provided. A counter for counting the outgoing signal of the first comparator as a clock, generating a digital control signal for stepping up an attenuation level of the programmable attenuator, and resetting the digital control signal by inputting the outgoing signal of the second comparator is provided in addition. Furthermore, a third comparator for generating an outgoing signal as the photoelectric switch through a comparison of the output voltage of the programmable attenuator with a decision level set beforehand is provided.

Then, the photoelectric conversion circuit is capable of using that for which a switching circuit for decreasing an amplification gain due to a final stage outgoing signal of the counter is provided.

In the invention, if the quantity of received light is too intensive for short distance or other reason, and thus an output voltage of the programmable attenuator exceeds the upper bound threshold of the first comparator, an outgoing signal of the first comparator is counted on the counter, and an attenuation by the programmable attenuator is advanced one step according to a digital control signal generated at every counts. This operation is kept going until an electrical signal attenuated by the programmable attenuator comes within the upper threshold. Then, if the quantity of received light decreases for long distance, mist, dust or the like, and thus a peak value of the output voltage of the programmable attenuator comes to the lower bound threshold or below of the second comparator, the digital control signal generated from the counter is reset on an output of the second comparator, and the programmable attenuator is returned to zero in attenuation. If the output voltage of the programmable attenuator exceeds the upper bound threshold of the first comparator at this point in time, an attenuation control over the programmable attenuator according to a counting of the counter is carried out to attenuation within the upper bound threshold. Thus, an output voltage of the programmable attenuator can be kept within an appropriate range. Accordingly, a stable and accurate identification signal will be obtainable without causing an erroneous operation through comparing the signal kept within an appropriate range with a decision level on the third comparator.

The invention will now be described with reference to the accompanying drawings representing one preferred embodiment thereof.

Brief Description of the Drawings

Fig. 1 is a block diagram representing a light reception signal circuit for photoelectric switch which is given in one embodiment of the invention;

Fig. 2 is a time chart for illustrating an operation of the circuit shown in Fig. 1;

Fig. 3 is a circuit diagram showing a concrete construction of each part given in Fig. 1;

Fig. 4 is a diagram of peak holding circuit;

Fig. 5 is a characteristic drawing for illustrating an operation of the invention;

Fig. 6 is an explanatory drawing of a transmissive photoelectric switch;

Fig. 7 is an explanatory drawing of a recurrent reflection type photoelectric switch;

Fig. 8 is a circuit diagram of a prior art system.

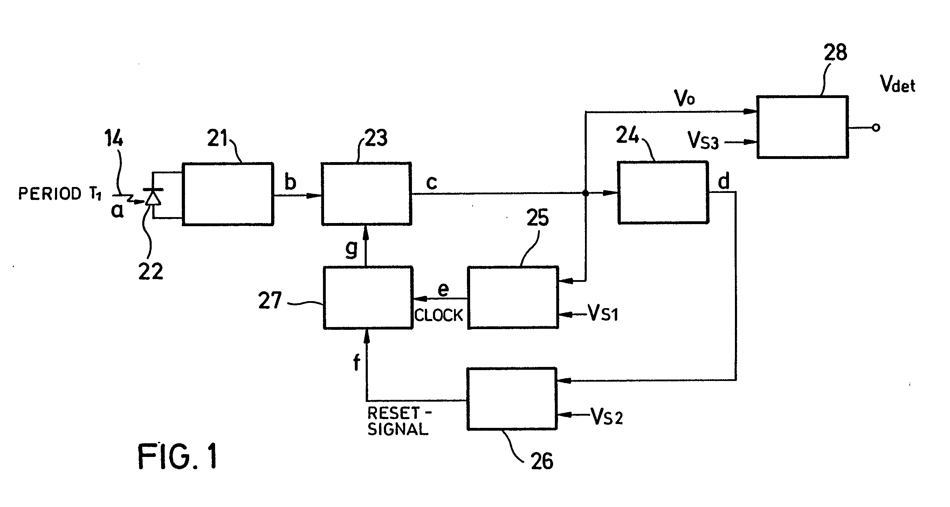

In Fig. 1, a reference character 21 denotes a photoelectric conversion circuit, wherein a photoelectric conversion element 22 such as photodiode or the like is provided on its input end. The light signal 14 from the light emitting part (not indicated) is incident on the photoelectric conversion element 22. A positional relation to the light emitting part is as shown in Fig. 6 or Fig. 7, and an object to be identified is provided intermediately of the light emitting part or reflecting plate. Then, the light emitting part emits the light signal 14 according to a preset period.

A reference character 23 denotes a programmable attenuator (hereinafter abbreviated to ATT), which inputs a pulsating electrical signal generated from the photoelectric conversion circuit 21 and attenuates the electrical signal at every preset constant levels according to a digital control signal which will be described hereinlater.

A reference character 24 denotes a peak holding circuit, which inputs a pulsating electrical signal generated from ATT 23 and holds its peak value on a sufficiently long time constant. The time constant is specified to be sufficiently longer than a displacing rate of the identified object or a moving member. Then, this may indicate a time constant sufficiently longer than an emission period of the light emitting part.

A reference character 25 denotes a first comparator, which compares a voltage level of the pulsating electrical signal generated from ATT 23 with a preset upper bound threshold $Vs_1$ and generates an electrical signal whenever the voltage level exceeds the upper bound threshold.

A reference character 26 denotes a second comparator, which compares the output voltage of the peak holding circuit 24 with a preset lower bound threshold $Vs_2$, and generates an electrical signal whenever the output voltage comes to the lower bound threshold $Vs_2$ or below.

A reference character 27 denotes a counter, which counts the electrical signal generated from the first comparator 25 as a clock, and goes on counting (increasing on up-counter and decreasing on down-counter). An outgoing signal of the counter 27 works as the digital control signal for ATT 23. For example, in the case of a 4-bit down-counter, if the initial value is "1111", it counts down as "1110", 1101", "1100", ... ... every time the clock is counted. ATT 23 has already inputted the 4-bit counter output as a digital control signal, and the signal is attenuated by a preset constant level, or -2 dB, for example, at every counting. Then, the electrical signal generated from the second comparator 26 is inputted as a reset signal, and the digital control signal is reset to the initial value "1111" according to the reset signal. ATT 23 is controlled to return to a zero state in attenuation by the digital control signal having been reset to the initial value "1111".

A reference character 28 denotes a third comparator, which inputs the output of ATT 23 as an appropriate signal voltage $V_0$, and generates an outgoing signal $V_{det}$ as the photoelectric switch through comparison with a preset decision level $Vs_3$.

In the aforementioned construction, a light such as infrared ray or the like is projected from the light emitting part (not indicated) at a predetermined period. If there is no object present intermediately of the photoelectric conversion element 22, the light is incident on the photoelectric conversion element 22 at a period $T_1$ equal to an emission period of the light emitting part. Upon incidence of the light signal 14, a pulsating electrical signal in magnitude according to a quantity of the light signal 14 is generated at the period $T_1$ on an output part b of the photoelectric conversion circuit 21. The electrical signal is inputted to ATT 23, attenuated by a predetermined quantity determined according to the digital control signal from the counter 27, and is then generated on an output part c.

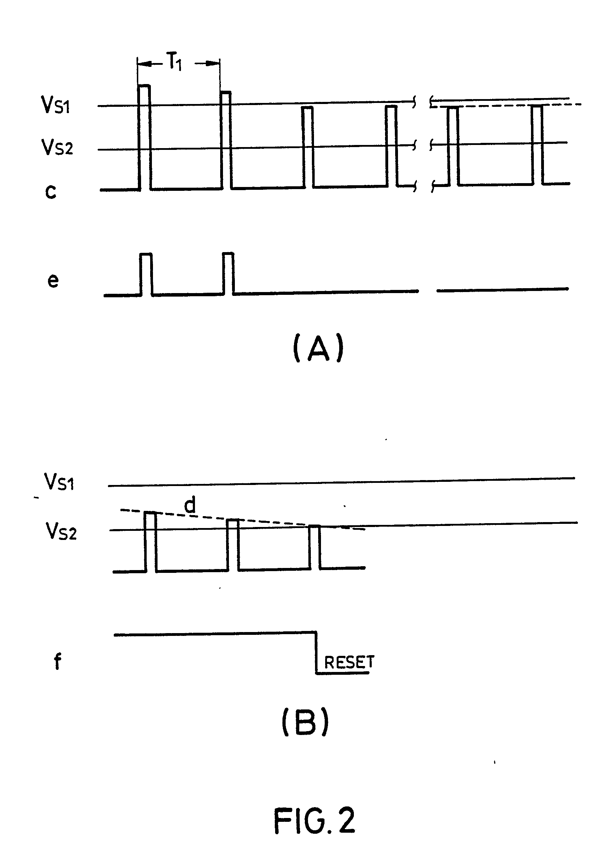

Here, the electrical signal generated on the output part c of ATT 23 is such that ATT 23 is initialized (the digital control signal being "1111"), and an attenuation is zero, for example, as shown in Fig. 2 (A). When the light signal 14 is inputted in such state, a pulsating electrical signal a is generated on the output part c of ATT 23. The electrical signal a is compared with the upper bound threshold $Vs_1$ by the first comparator 25. When exceeding the upper bound threshold $Vs_1$ as illustrated, a pulsating outgoing signal g is generated on an output part e of the first comparator 25. The outgoing signal g is counted by the counter 27, the digital control signal generated on an output part g reads "1110" to increase an attenuation of ATT 23 by a preset constant level (-2 dB).

Consequently, when the light signal 14 is inputted after the period $T_1$, the level of an electrical signal b coming out of ATT 23 becomes -2 dB lower than the previous level. In the case illustrated therein, since the level of the electrical signal b has exceeded the upper bound threshold $Vs_1$, a signal h is generated by the comparator 25 as ever before. Thus, the counter 27 recommences counting and increases an attenuation of ATT 23 again by the predetermined level (-2 dB).

Thus, the level of an electrical signal generated on the output end c of ATT 23 comes within the upper bound threshold $Vs_1$, the first comparator 25 generates a pulsating signal, operates the counter 27 and increases an attenuation of ATT 23 by the predetermined level (-2 dB). Then, when a level of the electrical signal at the output part c comes within the upper bound threshold Vs₁, the first comparator does not generate the pulsating signal, and an operation of the counter 27 comes to stop. Thus, the attenuation of ATT 23 is kept at the level increased so far.

Further, the electrical signal at the output end c of ATT 23 has its peak value held on a sufficiently long time constant by the peak holding circuit 24, a voltage signal indicated by a broken line in Fig. 2 (A) is generated on the output end d, which is compared with a lower bound threshold Vs₂ by the second comparator 26. Here, a level of the electrical signal generated normally on the output part c of ATT 23 is set to be somewhat lower than the upper bound threshold Vs₁, as shown in Fig. 2 (A), and hence is greater than the lower bound threshold Vs₂ naturally, accordingly the second comparator 26 does not generate an outgoing signal (reset signal of the counter 27), and a counting state of the counter 27 is so maintained.

Next, when the object (moving member) is identified, the light signal 14 is intercepted, the output electrical signal $V_0$ of ATT 23 becomes zero in level consequently, and the outgoing signal $V_{det}$ of the third comparator 28 is changed to generate a signal indicating that the object has been identified. Here, an emission period of the light emitting part is set correspondingly to a displacing rate of the object as described hereinbefore, therefore the number of pulsating electrical signals to be zero upon identification of the object is specified, for example, one only. That is, in Fig. 2 (A), the emission period is set so that a pulsating electrical signal generated at the period $T_1$ will annihilate for one pulse upon identification of the object. Then, a time constant of the peak holding circuit 24 is set to be sufficiently long correspondingly to a displacing rate of the object, namely the aforementioned emission period. Thus, if the signal annihilates for one pulse upon identification of the object, an output voltage of the peak holding circuit 24 does not drop so suddenly, and the second comparator 26 will never generate an outgoing signal (reset signal of the counter 27). That is, the counter 27 will not be reset according to operation for the object identification.

On the other hand, where a quantity of the received light signal 14 itself decreases due to mist, dust and the like, the decrease takes place slowly for relatively long period of time as shown in Fig. 2 (B). Thus, a voltage on an output part d of the peak holding circuit 24 also drops slowly, and when it comes to the lower bound threshold Vs₂ or below, a reset signal is generated to an output part f of the second comparator 26, and a count value of the counter 27 is reset. Thus, the digital control signal comes to "1111" in initial value, and ATT 23 is open to have an attenuation at 0 dB. Consequently, a level of the outgoing signal $V_0$ of ATT 23 rises to $V_0 > Vs_2$. In this case, where $V_o > Vs_1$, the counter 27 is operated for counting until $Vs_1 > V_0 > Vs_2$ likewise, and an attenuation of ATT 23 will be increased.

As described, an upper bound decision of the outgoing signal $V_0$ of ATT 23 and a resultant clock generation to the counter 27 are carried out on a real time, therefore the outgoing signal $V_0$ of ATT 23 can be adjusted immediately to an appropriate voltage level. Then, a lower bound decision is carried out on integral value which is an output of the peak holding circuit (analog memory) 24, therefore a decrease in quantity of received light due to an interception of the object can definitely be discriminated from a decrease in quantity of received light due to mist, dust or the like. As a result, the outgoing signal $V_0$ of ATT 23 which works as a decision data can automatically be kept within a proper range at all times.

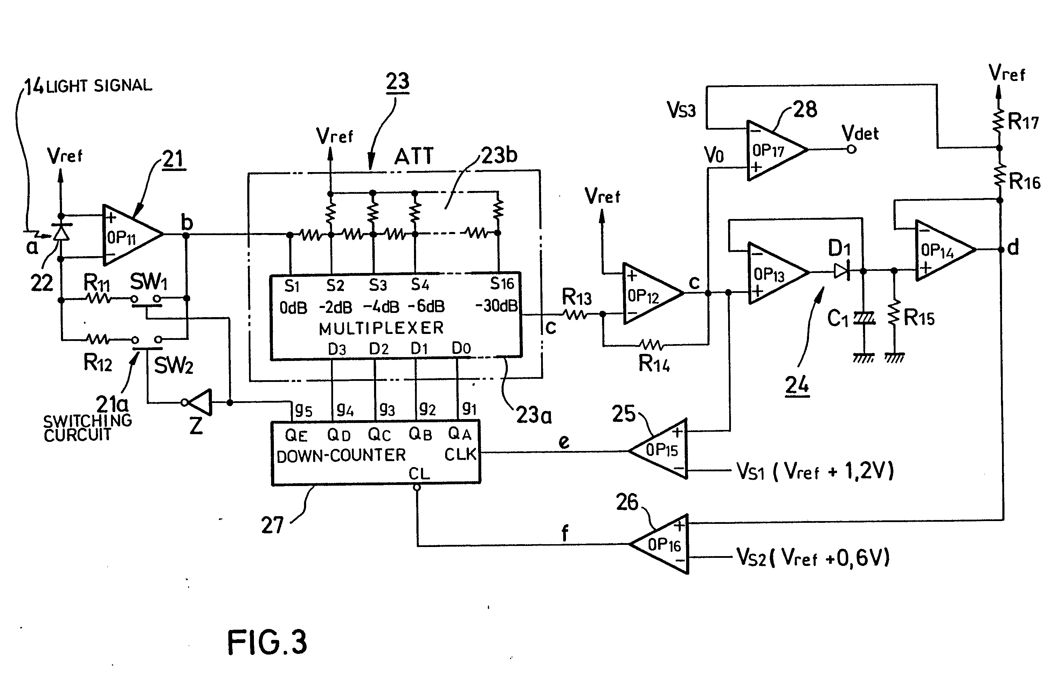

Fig. 3 represents a concrete circuit configuration of each component (portion indicated by block) shown in Fig. 1.

In the drawing, the photoelectric conversion circuit 21 has an operational amplifier $OP_{11}$ connecting the photoelectric conversion element 22 such as photodiode or the like between ( + ) input end and (-) input end illustrated therein. A reference voltage $V_{ref}$ is impressed to ( + ) input end of the operational amplifier $OP_{11}$. Then, a feedback resistance is provided between output end and (-) input end of the operational amplifier $OP_{11}$, and a switching circuit 21a with two resistances $R_{11}$, $R_{12}$ different in resistance value connected in parallel through switching contacts $SW_1$, $SW_2$ respectively is used as the feedback resistance circuit.

ATT 23 has a multiplexer 23a and also an attenuating resistance circuit 23b latticed between its terminals $S_1$, $S_2$, $S_3$, ... $S_{16}$ and output end of the operational amplifier $OP_{11}$. Controlling input terminals (4-bit) $D_3$, $D_2$, $D_1$, $D_0$ of the multiplexer 23a are connected to output terminals $Q_D$, $Q_C$, $Q_B$, $Q_A$ of the counter (down-counter) 27, input a 4-bit digital control signal changing at every counting operations, select and input either one of the terminals $S_1$ to $S_{16}$ accordingly thereto, and decide an attenuation corresponding to these terminals $S_1$ to $S_{16}$. For example, in case the 4-bit digital control signal is "1111", the terminal S1 is inputted selectively, and the attenuation is 0 dB. If it is "1110", then the terminal $S_2$ is inputted selectively, and the attenuation is -2 dB. The attenuation is decided likewise correspondingly to the digital control signal, the electrical signal generated on the output part b of the operational amplifier $OP_{11}$ is attenuated according to a decided attenuation and then generated from an output part c′.

A voltage amplifier circuit consisting of an operational amplifier $OP_{12}$, an input resistance $R_{13}$, a feedback resistance $R_{14}$ is connected to the output part c′ of the aforementioned multiplexer, and the electrical signal generated on the output part c′ works as the outgoing signal $V_0$ of ATT 23.

5

A 5-bit down-counter is used for the counter 27, of which 4-bit outputs $g_4$, $g_3$, $g_2$, $g_1$ work as the aforementioned digital control signal. Then, a fifth-bit output $g_5$ on the final stage is used for controlling the switches $SW_1$, $SW_2$ for changing the feedback resistances $R_{11}$, $R_{12}$ of the photoelectric conversion circuit 23. That is, the output $g_5$ is "1" normally, therefore the switch $SW_1$ is kept on. When counting on the counter 27 advances and the output $g_5$ on the final stage becomes "0", the switch $SW_1$ gets off, and the switch $SW_2$ is turned on instead through an inverter Z.

The peak holding circuit 24 has the operational amplifier 13 for inputting an outgoing signal of the operational amplifier $OP_{12}$ to (+) input end. An output end of the operational amplifier 13 is connected to (+) input end of the operational amplifier 14 through a diode $D_1$ in a forward direction. A cathode of the diode $D_1$ is connected to (-) input end of the operational amplifier $OP_{13}$ and also connected to a ground by way separately of a capacitor $C_1$ and a resistance $R_{15}$, thus constituting a time constant circuit. Then, an output end of the operational amplifier $OP_{14}$ is connected to its (-) input end, and also connected to the reference voltage $V_{ref}$ through resistances $R_{16}$, $R_{17}$ in series.

The first comparator 25, second comparator 26 and third comparator 28 comprise the operational amplifiers $OP_{15}$, $OP_{16}$, $OP_{17}$ respectively. Outgoing signal $V_0$ of ATT 23 which is generated on the output part c of the operational amplifier $OP_{12}$ is impressed to each (+) input end of the operational amplifiers $OP_{15}$, $OP_{17}$ for the first and third comparators, and output voltage generated on the output part d of the peak holding circuit 24 is impressed to (+) input end of the operational amplifier $OP_{16}$ for the second comparator. The upper bound threshold $Vs_1$ ($V_{ref}$ + 1.2V) is impressed to (-) input end of the operational amplifier $OP_{15}$, and the lower bound threshold $Vs_2$ ($V_{ref}$ + 0.6V) is impressed to (-) input end of the operational amplifier $OP_{16}$. Further, (-) input end of the operational amplifier $OP_{17}$ is connected to a point intermediate of the resistances $R_{17}$, $R_{16}$, and a voltage on the intermediate point is impressed as the decision voltage $Vs_3$.

An output end e of the operational amplifier $OP_{15}$ is connected to a clock terminal CLK of the counter 27, and a pulse signal generated from the output end e is counted by the counter 27 as a clock. Then, an output end f of the operational amplifier $OP_{16}$ is connected to a clear terminal CL of the counter 27, and a signal generated from the output end f is added to the counter 27 as a reset signal. Further, the detection signal $V_{det}$ as a photoelectric switch is generated from an output end of the operational amplifier $OP_{17}$.

In the aforementioned construction, the feedback resistances $R_{11}$, $R_{12}$ provided on the photoelectric conversion circuit 21 are related as $R_{11} = 40 R_{12}$. Here, when the switches $SW_1$, $SW_2$ are changed while a quantity of the received light signal 14 is constant, outputs of the operational amplifier $OP_{11}$ are related as follows. That is, if an output when the switch $SW_1$ is turned on, the switch $SW_2$ is turned off, and the feedback resistance is $R_{11}$ is $b_1$, and an output when the switch $SW_1$ is turned off, the switch $SW_2$ is turned on and the feedback resistance is $R_{12}$ is $b_2$, then $b_2$ takes an output value -32 dB to $b_1$.

Here, the reason why a switching circuit of the feedback resistances $R_{11}$, $R_{12}$ by the switches $SW_1$, $SW_2$ is provided is that the three points must be satisfied concurrently: (1) a range for controlling the quantity of light, namely an attenuation controlling width by ATT 23 will be doubled (0 to 62 dB), (2) a saturation of outputs of the operational amplifier $OP_{11}$ will be prevented, and (3) S/N ratio will be enhanced.

The operational amplifier $OP_{12}$ for the voltage amplifier circuit is that of +30 dB. Now, assuming a dynamic range of the operational amplifiers $OP_{11}$ to $OP_{16}$ is 1.25V each, a maximum value at the output part b of the photoelectric conversion circuit 21 is 1.25V, ATT 23 is then -30 dB, and an output at the output part c' is about 40 mV. If the output of the output part c' is inputted straight to the operational amplifier $OP_{15}$ for the first comparator, an accurate detection is not realizable for offset voltage, noise and others. Accordingly, the operational amplifier $OP_{12}$ which is +30 dB to compensate -30 dB of ATT 23 is added, and the maximum value of the output part c is specified at 1.25V.

In Fig. 3, if the outgoing signal $V_0$ exceeds the upper bound threshold $Vs_1$, a pulse signal synchronized with the emission period is generated from the operational amplifier $OP_{15}$ for the first comparator until $V_0 < Vs_1$. The signal is counted by the counter 27 as a clock pulse, and ATT 23 is controlled on a digital control signal which is the output thereof. Here, an output g ($g = g_5, g_4, g_3, g_2, g_1$) of the counter 27 is "11111" in initial value. In this case, ATT 23 is 0 dB, the switch $SW_1$ is turned on, and the switch $SW_2$ is turned off. The output g is counted down whenever the clock is counted. Then, if still $V_0 > Vs_1$ in the state where counting has advanced to g = 10000 (ATT 23 being -30 dB), g will be 01111 by the next counting. Thus, the switch $SW_1$ is turned off, $SW_2$ is turned on, and the output part b is -32 dB. On the other hand, ATT 23 is 0 dB. If $V_0 > Vs_1$ thereafter, then counting (counting down) of the counter 27 is recommenced, and an attenuation increases by -2 dB on ATT 23. As a result, the range for controlling a quantity of light can be expanded to 0 to 62 dB, as described hereinbefore.

6

The next table represents a relation among voltages at points b and c in Fig. 1, value counted on the counter 27, and attenuation level (dB) of ATT 23 when a measuring distance $l$ is changed from 0.4m to 25m in a transmissive photoelectric switch.

| Distance (m) | Voltage at b point (V) | Voltage at c point (V) | Counted value | | | | | ATT (dB) |
|---|---|---|---|---|---|---|---|---|
| | | | $g_5$ | $g_4$ | $g_3$ | $g_2$ | $g_1$ | |
| 0.5 | 1.030 | 1.14 | 0 | 0 | 0 | 0 | 1 | -60 |
| 1.0 | 0.800 | 0.90 | 0 | 0 | 0 | 0 | 1 | -60 |
| 2.0 | 0.535 | 0.93 | 0 | 0 | 0 | 1 | 1 | -56 |
| 4.0 | 0.320 | 0.89 | 0 | 0 | 1 | 0 | 1 | -52 |
| 6.0 | 0.193 | 0.86 | 0 | 0 | 1 | 1 | 1 | -48 |
| 8.0 | 0.118 | 0.82 | 0 | 1 | 0 | 0 | 1 | -44 |
| 10.0 | 0.082 | 0.92 | 0 | 1 | 0 | 1 | 1 | -40 |
| 12.0 | 0.059 | 1.02 | 0 | 1 | 1 | 0 | 1 | -36 |
| 14.0 | 0.045 | 1.08 | 0 | 1 | 1 | 1 | 0 | -34 |
| 16.0 | 1.220 | 1.06 | 1 | 0 | 0 | 0 | 0 | -30 |
| 18.0 | 0.840 | 0.94 | 1 | 0 | 0 | 0 | 1 | -28 |
| 20.0 | 0.710 | 1.01 | 1 | 0 | 0 | 1 | 0 | -26 |
| 22.0 | 0.620 | 1.11 | 1 | 0 | 0 | 1 | 1 | -24 |
| 24.0 | 0.530 | 1.18 | 1 | 0 | 1 | 0 | 0 | -22 |

As will be apparent from the table above, the voltage at b point rises according as the measuring distance $l$ becomes short under the condition where a quantity of light is constant, a countdown of the counter 27 advances, and an attenuation dB of ATT 23 increases. The voltage at c point thus comes in a stable range.

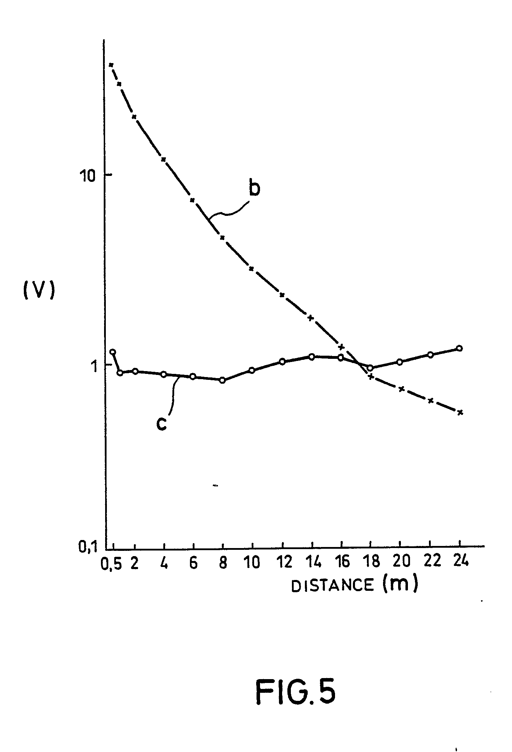

Fig. 5 indicates the above relation in graph. The voltage at b point (light reception signal input) of Fig. 5 is a value obtained through equivalent conversion of the feedback resistances $R_{11}$, $R_{12}$, and hence is indicated in proportion to a light input.

Then, a value obtained through dividing a voltage generated on the output part d of the peak holding circuit 24 by resistances $R_6$, $R_7$ is used for the decision voltage $Vs_3$ of the operational amplifier $OP_{17}$ for the third comparator. When $R_6 = R_7$, $Vs_3$ takes a value half of the voltage on the output part d.

The decision voltage $Vs_3$ may be specified as an absolute reference voltage value, or $Vs_3 = V_{ref} + 0.3V$, for example, without changing on an output value of the peak holding circuit 24.

Then, from adjusting the digital control signal to ATT 23 from 4 bits to 6 bits and the attenuation per step from -2 dB to -0.5 dB, a range between the upper bound threshold $Vs_1$ and the lower bound threshold $Vs_2$ can be narrowed, thereby realizing a further fine control.

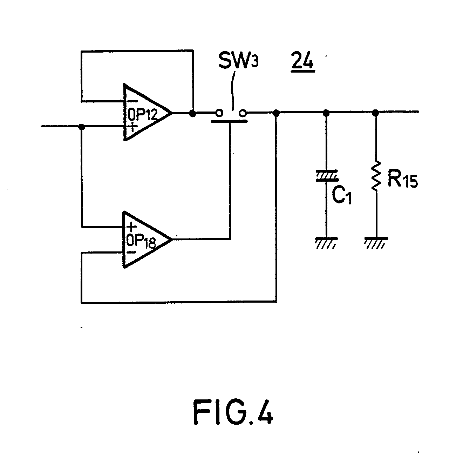

Still, from constituting the peak holding circuit 24 of an operational amplifier $OP_{18}$ and an analog switch $SW_3$ as shown in Fig. 4, the diode $D_1$ is not required and thus the entire circuit may be arranged to MOS.

Further, S/N ratio can satisfactorily be enhanced by allowing hysteresis with the first and second comparators 25, 26.

As described above, according to the invention, an output value to work for detection and comparison against change in measuring distance, mist, dust and the like can be controlled automatically to an appropriate value, therefore an erroneous operation will not result, and a stable and accurate operation for detection may be ensured at all times.

## Claims

(1) A light reception signal circuit for photoelectric switch, comprising:

a photoelectric conversion circuit for receiving a light from a light emitting part controlled periodically for emission, and generating an electrical signal corresponding to a quantity of the received light;

a programmable attenuator for inputting the electrical signal coming from the photoelectric conversion circuit, and attenuating the electrical signal stepwise at every constant levels according to a digital control signal;

a first comparator for comparing an output voltage of the programmable attenuator with an upper bound threshold set beforehand, and generating an outgoing signal whenever said output voltage exceeds the upper bound;

a peak holding circuit for inputting the output voltage of said programmable attenuator, and holding a peak value of the output voltage on a time constant sufficiently longer than an emission period of said light emitting part;

a second comparator for comparing an output voltage of the peak holding circuit with a lower bound threshold set beforehand, and generating an outgoing signal when said output voltage comes to the lower bound threshold or below;

a counter for counting the outgoing signal of said first comparator as a clock, generating a digital control signal for stepping up an attenuation level of said programmable attenuator at every counts, and resetting said digital control signal by inputting the outgoing signal of the second comparator;

a third comparator for generating an outgoing signal as the photoelectric switch through comparing the output voltage of said programmable attenuator with a decision level set beforehand.

(2) The light reception signal circuit for photoelectric switch as defined in claim 1, wherein the photoelectric conversion circuit is equipped with a switching circuit for decreasing an amplification gain on a final stage outgoing signal of the counter.

FIG. 1

PERIOD T₁

EP 0 340 443 A2

(A)

(B)

FIG.2

FIG.3

FIG.4

FIG.5

FIG.6

FIG. 7

FIG.8